# EUROPEAN PATENT SPECIFICATION

(11) **EP 3 434 573 B1**
(45) Date of publication and mention of the grant of the patent: **12.08.2020**
(21) Application number: 18166618.1
(22) Date of filing: 10.04.2018
(51) Int. Cl.: B62M 3/08

(54) **ASSEMBLING STRUCTURE FOR CRANK AND PEDAL**
MONTAGESTRUKTUR FÜR KURBELWELLEN- UND PEDAL
STRUCTURE D'ASSEMBLAGE POUR MANIVELLE ET PÉDALE

(30) Priority: 28.07.2017 TW 106125620
(43) Date of publication of application: 30.01.2019
(73) Proprietor: Hsieh, Chin-Long, Taichung City 432 (TW)
(72) Inventor: Hsieh, Chin-Long, Taichung City 432 (TW)
(74) Representative: Lang, Christian

(56) References cited:
- EP-A1- 1 878 649
- US-A- 1 507 206
- US-A1- 2004 055 413
- US-A1- 2005 204 859

## Description

### Background of the Invention

### 1. Technical Field

The invention relates to bicycles, particularly to connection between a pedal and a crank.

### 2. Related Art

With development of decades, bicycles have been very popular in exercise, recreation and transportation. A spindle of the conventional pedal is threaded to match a threaded hole at the outboard end of the cranks. Because the direction of the thread on the spindle is almost the same as the direction of the force exerted by a rider's leg, the spindle is easy to be broken. The more heavy the rider's weight is, the more easily the spindle is broken.

On the other hand, for the sake of lightweight, some cranks are made of aluminum alloy. Because aluminum alloy is not tough enough, some pedals are additionally provided with a hard bushing around the spindle to prevent thread damage of the crank. Such a design will increase the manufacturing cost.

Further, the right-side (usually the drive-side) pedal spindle is right-hand threaded, and the left-side (usually the non-drive-side) pedal spindle is left-hand (reverse) threaded to help prevent it from becoming loose by an effect called precession. This will also cause inconvenience and disadvantage in assembling and preparation.

In addition, conventional assembling structures for a bicycle realizing a non-screwing engagement between a crank and a pedal unit are known from documents EP 1 878 649 A1 - considered the closest Prior Art-, US 2004/055413 A1, US 1 507 206 A and US 2005/204859. Such assembling structures include a crank and a spindle extending from a pedal unit. In the design of document EP 1 878 649 A1 the crank has a conical keyed hole and the spindle has one end connected to a pedal body and another end thereof being defined as conical connecting end with keys matched with the keyed hole. In the structure of document US 2004/055413 A1 both the crank hole and the connecting end of the spindle have a circular or hexagonal cross-section and a smooth surface. Again, in the structure of document US 1 507 206 A both the crank hole and the connecting end of the spindle have a circular cross-section and a smooth surface. Document US 2005/204859 A1 discloses another type of conventional assembling structure for a bicycle realizing a non-screwing engagement between a crank and a pedal unit, which includes a crank and a shaft connected to a pedal body, in which the shaft is fixed to the pedal body and the pedal shaft is rotatable relative to the corresponding crank arm.

### Summary of the Invention

An object of the invention is to provide another assembling structure for a crank and a pedal, which adopts a connection of a flower-shaped keyed hole and flower-shaped keys to replace screwing. This can enhance strength of the pedal spindle, can avoid distinguishing left one and right one and can reduce the manufacturing costs.

To accomplish the above object, the assembling structure for a crank and a pedal having the features defined in claim 1 is provided, which includes a crank, a pedal and a fastener. The crank has a flower-shaped keyed hole at an outboard end thereof. The pedal has a body and a spindle with a connecting end. The connecting end is formed with flower-shaped keys corresponding to the flower-shaped keyed hole so that the connecting end is inserted into the flower-shaped keyed hole with engagement between the flower-shaped keyed hole and the flower-shaped keys. An end surface of the connecting end is formed with a first threaded hole. The fastener passes through the flower-shaped keyed hole and screws into the first threaded hole for fixing the connecting end of the spindle to the crank. The flower-shaped keyed hole and the connecting end of the spindle have a substantial cylindrical shape. The flower-shaped keyed hole and the flower-shaped keys are wheel-shaped teeth which are arranged in protrusions and recesses. A flange is formed on an outer end of the spindle opposite to the connecting end thereof. An hexagon hole is formed in the flange. The assembling structure further comprises an adjustment sleeve and a limiting sleeve are put around the spindle to be sandwiched between the crank and the body of the pedal, where the limiting sleeve has an inner hole corresponding to the flower-shaped keys so as to be limited at a bottom of the flower-shaped keys. Said limiting sleeve abuts against the crank around the flower-shaped keyed hole.

### Brief Description of the Drawings

FIG. 1 is a perspective view of a first example of an assembling structure for a bicycle;
FIG. 2 is an exploded view of the first example of an assembling structure for a bicycle;
FIG. 3 is a cross-sectional view of the first example of an assembling structure for a bicycle;
FIG. 4 is a cross-sectional view of another mode of the first example of an assembling structure for a bicycle;
FIG. 5 is a perspective view of an embodiment of the invention;
FIG. 6 is an exploded view of the embodiment of the invention;
FIG. 7 is a cross-sectional view of the embodiment of the invention; and
FIG. 8 is a cross-sectional view of another mode of the embodiment of the invention.

### Detailed Description of the Invention

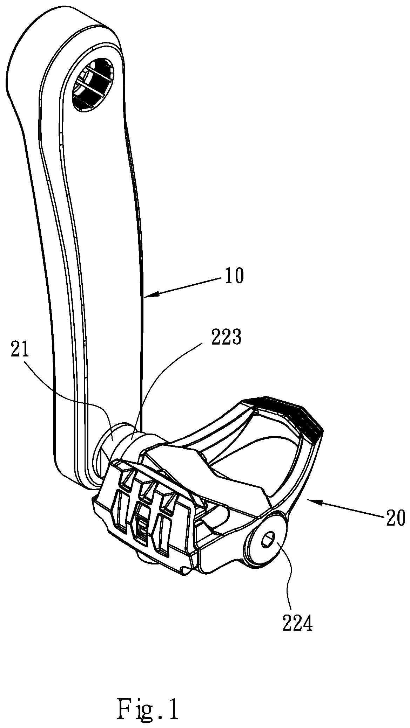

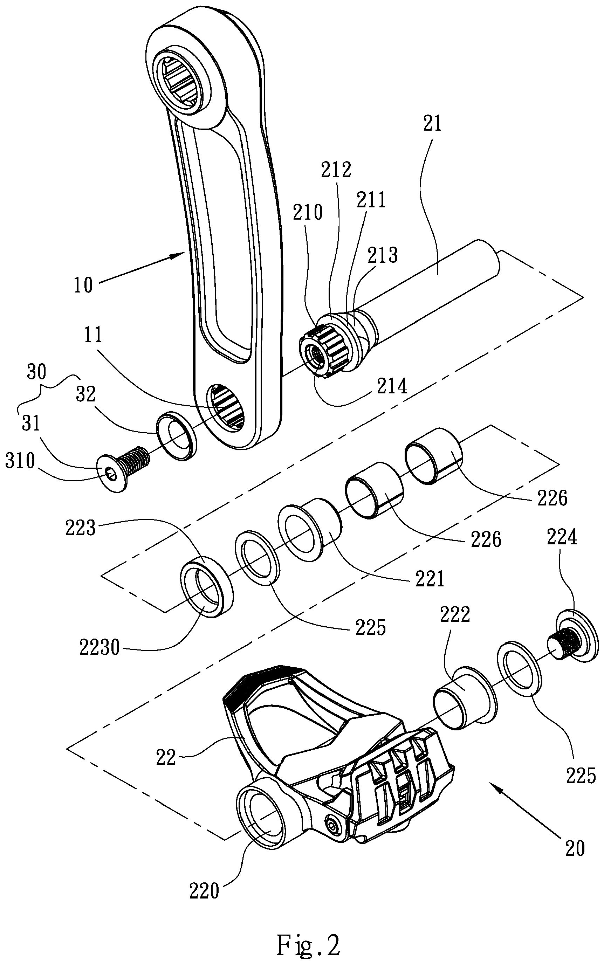

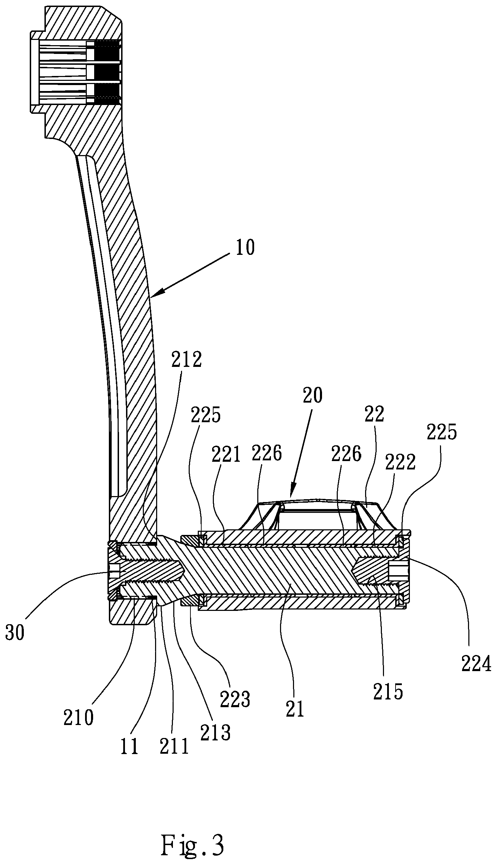

Please refer to FIGS. 1-3. An assembling structure for a crank and a pedal is shown, which includes a crank 10 and a pedal 20. The crank 10 has a flower-shaped keyed hole 11 at an outboard end thereof for connecting the pedal 20. The pedal 20 has a body 22 and a spindle 21 with a connecting end. The connecting end is formed with flower-shaped keys 210 corresponding to the flower-shaped keyed hole 11 so that the connecting end can be inserted into the flower-shaped keyed hole 11 with tight engagement between the flower-shaped keyed hole 11 and the flower-shaped keys 210. A flange 211 is formed on the spindle 21. The flange 211 abuts against the flower-shaped keys 210. A side of the flange 211, which abuts against the flower-shaped keys 210, is a flat 212, and the other side thereof is a tapered conic section 213. The flat 212 abuts against the crank 10 around the flower-shaped keyed hole 11 when the connecting end of the spindle 21 is completely inserted into the flower-shaped keyed hole 11.

An end surface of the connecting end is formed with a first threaded hole 214. The other end surface of the spindle 21 is formed with a second threaded hole 215. A fastener 30 passes through the flower-shaped keyed hole 11 and is screwed into the first threaded hole 214 for fixing the connecting end of the spindle 21 to the crank 10. Each of two ends of a spindle hole 220 of the body 22 of the pedal 20 is provided with a bearing 221, 222. A buffering bushing 223 is sandwiched between the flange 211 and the body 22. The buffering bushing 223 is formed with a conic hole 2230 correspondingly connecting with the conic section 213 of the flange 211. A hex socket cap screw 224 is screwed with the second threaded hole 215. The buffering bushing 223 can guarantee the body 22 can rotate about the spindle 21.

The spindle 21 of the pedal 10 is fixed to the crank 10 by the connection of a flower-shaped keyed hole 11 and flower-shaped keys 210. This can enhance strength of the pedal spindle 21 and avoid distinguishing left one and right one to reduce the manufacturing cost. Also, the flange abutting against the crank 10 can improve the connective strength between the spindle 21 and the crank 10.

The flower-shaped keyed hole 11 and the flower-shaped keys 210 are wheel-shaped teeth which are arranged in protrusions and recesses and have Mohs taper.

Each of the bearings 221, 222 of the body 22 of the pedal 20 is further provided with a washer 225.

The bearings 221, 222 are self-lubricating bearings.

The fastener 30 is consisted of a bolt 31 and a washer 32. The head of the bolt 31 has a hexagon hole 310.

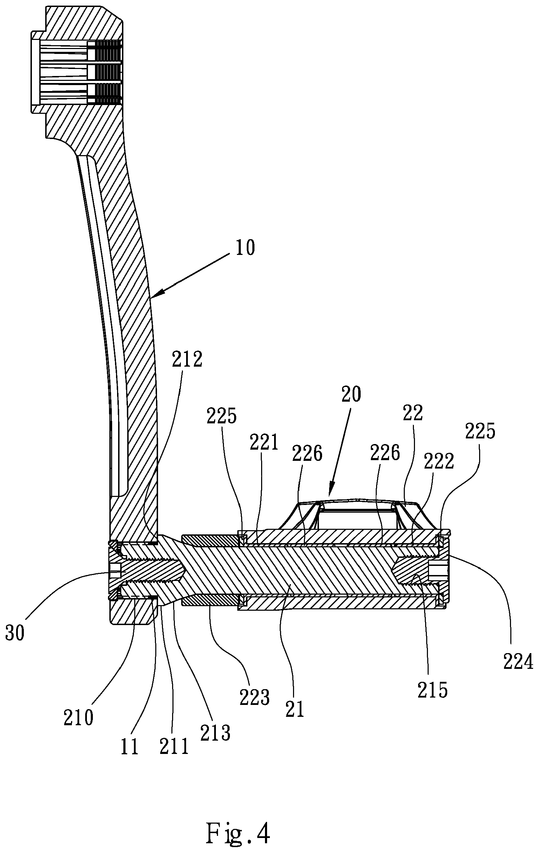

The buffering bushing 223 can be varied in thickness or quantity to match different length of the spindle 21 as shown in FIG. 4.

At least one of the bearings 221, 222 is a self-lubricating bearing 226.

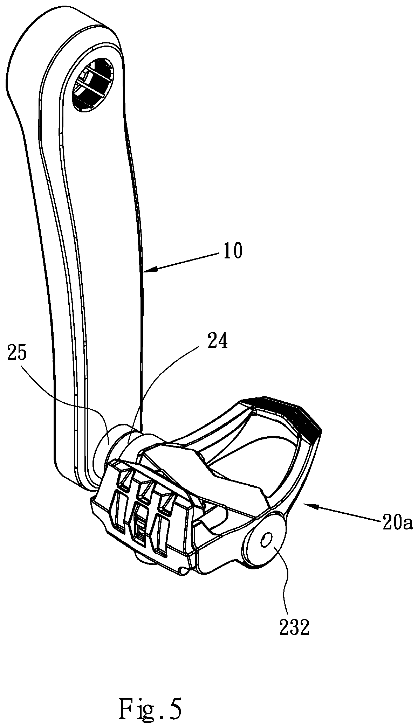

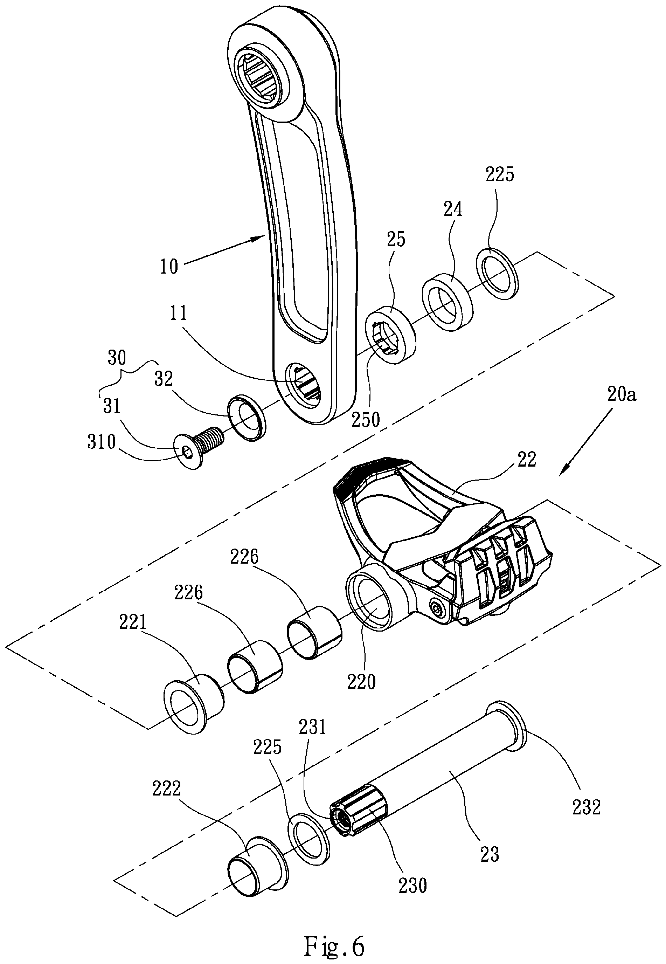

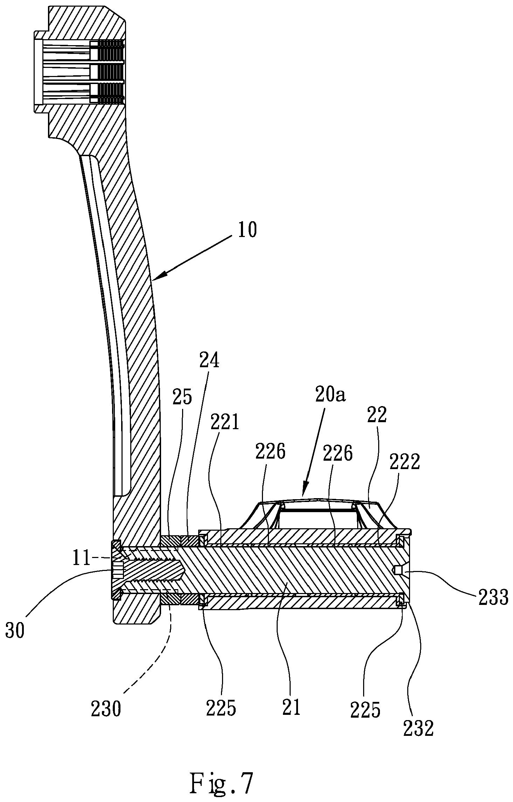

Please refer to FIGS. 5-7, which shows the preferred embodiment of the invention. The embodiment includes a crank 10 and a pedal 20a. The crank 10 has a flower-shaped keyed hole 11 at an outboard end thereof for connecting the pedal 20. The pedal 20 has a body 22 and a spindle 23 with a connecting end. The connecting end is formed with flower-shaped keys 230 corresponding to the flower-shaped keyed hole 11 so that the connecting end can be inserted into the flower-shaped keyed hole 11 with tight engagement between the flower-shaped keyed hole 11 and the flower-shaped keys 230. An end surface of the connecting end is formed with a threaded hole 231. A flange 232 is formed on an outer end of the spindle 21. A hexagon hole 233 is formed in the flange 232.

Each of two ends of a spindle hole 220 of the body 22 of the pedal 20 is provided with a bearing 221, 222. An adjustment sleeve 24 and a limiting sleeve 25 are put around the spindle 23. The limiting sleeve 25 has an inner hole 250 corresponding to the flower-shaped keys 230 so as to be limited at the bottom of the flower-shaped keys 230. When the connecting end of the spindle 23 is completely inserted into the flower-shaped keyed hole 11, a fastener 30 passes through the flower-shaped keyed hole 11 and is screwed into the threaded hole 231 to fix the spindle 23 to the crank 10. The limiting sleeve 25 abuts against the crank 10 around the flower-shaped keyed hole 11. The adjustment sleeve 24 can be used to keep a gap between the limiting sleeve 25 and the body 22. This can guarantee the body 22 can rotate about the spindle 23.

The flower-shaped keyed hole 11 and the flower-shaped keys 230 are wheel-shaped teeth which are arranged in protrusions and recesses and have Mohs taper.

Each of the bearings 221, 222 of the body 22 of the pedal 20a is further provided with a washer 225.

The bearings 221, 222 are self-lubricating bearings.

The fastener 30 is consisted of a bolt 31 and a washer 32. The head of the bolt 31 has a hexagon hole 310.

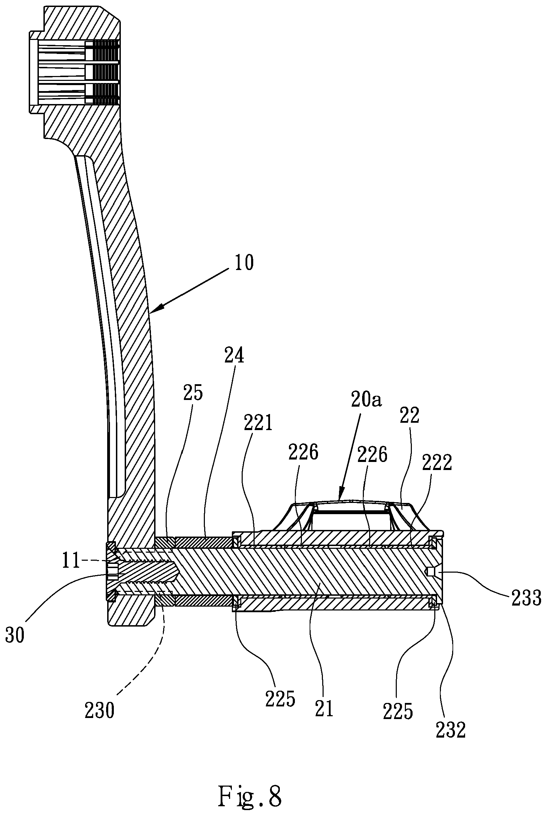

The adjustment sleeve 24 can be varied in thickness or quantity to match different length of the spindle 23 as shown in FIG. 8.

At least one of the bearings 221, 222 is a self-lubricating bearing 226.

It will be appreciated by persons skilled in the art that the above embodiments have been described by way of example only and not in any limitative sense, and that various alterations and modifications are possible without departure from the scope of the invention as defined by the appended claims.

## Claims

1. An assembling structure for a bicycle, comprising:
a crank (10), having a flower-shaped keyed hole (11) at an outboard end thereof;
a pedal (20a), having a body (22) and a spindle (23) with a connecting end, the connecting end being formed with flower-shaped keys (230) corresponding to the flower-shaped keyed hole (11) so that the connecting end is inserted into the flower-shaped keyed hole (11) with engagement between the flower-shaped keyed hole (11) and the flower-shaped keys (230), and an end surface of the connecting end being formed with a threaded hole (231); and
a fastener (30) passing through the flower-shaped keyed hole (11) and being screwed into the threaded hole (231) for fixing the connecting end of the spindle (23) to the crank (10);
**characterized in that** the flower-shaped keyed hole (11) and the flower-shaped keys (230) are wheel-shaped teeth which are arranged in protrusions and recesses; and
a flange (232) is formed on an outer end of the spindle (23) opposite to the connecting end thereof, wherein a hexagon hole (233) is formed in the flange (232);
the assembling structure further comprising an adjustment sleeve (24) and a limiting sleeve (25) that are put around the spindle (23) to be sandwiched between the crank (10) and the body (22) of the pedal (20a), the limiting sleeve (25) has an inner hole (250) corresponding to the flower-shaped keys (230) so as to be limited at a bottom of the flower-shaped keys (230), the limiting sleeve (25) abuts against the crank (10) around the flower-shaped keyed hole (11).

2. The assembling structure of claim 1, wherein each of two ends of a spindle hole (220) of the body (22) of the pedal (20a) is provided with a bearing (221, 222).

3. The assembling structure of claim 2, wherein each of the bearings (221, 222) is further provided with a washer (225).

4. The assembling structure of claim 1, wherein the fastener (30) is consisted of a bolt (31) and a washer (32), and a head of the bolt (31) has a hexagon hole (310).

## Patentansprüche

1. Anordnungsstruktur für ein Fahrrad, umfassend:
eine Kurbel (10), die eine blütenförmige Formschlussöffnung (11) an ihrem äußeren Ende aufweist;
ein Pedal (20a), das einen Körper (22) und eine Spindel (23) mit einem Verbindungsende aufweist, wobei das Verbindungsende mit blütenförmigen Passfedern (230) ausgebildet ist, die der blütenförmigen Formschlussöffnung (11) entsprechen, so dass das Verbindungsende in die blütenförmige Formschlussöfnung (11) mit Eingriff zwischen der blütenförmigen Formschlussöffnung (11) und den blütenförmigen Passfedern (230) gesteckt wird, und wobei eine Endfläche des Verbindungsendes mit einer Gewindebohrung (231) ausgebildet ist, und
ein Befestigungsmittel (30), das durch die blütenförmige Formschlussöffnung (11) verläuft und in die Gewindebohrung (231) geschraubt ist, um das Verbindungsende der Spindel (23) an der Kurbel (10) zu befestigen;
**dadurch gekennzeichnet, dass**
die blütenförmige Formschlussöffnung (11) und die blütenförmigen Passfedern (230) radförmige Zähne sind, die in Vorsprüngen und Aussparungen angeordnet sind, und dass
ein Flansch (232) an einem äußeren Ende der Spindel (23) entgegengesetzt zu ihrem Verbindungsende angeordnet ist, wobei ein hexagonales Loch (233) in dem Flansch (232) ausgebildet ist,
wobei die Anordnungsstruktur ferner eine Einstellhülse (24) und eine Begrenzungshülse (25) umfasst, die um die Spindel (23) angeordnet werden, um zwischen der Kurbel (10) und dem Körper (22) des Pedals (20a) eingeklemmt zu werden, wobei die Begrenzungshülse (25) ein inneres Loch (250) aufweist, das den blütenförmigen Passfedern (230) entspricht, um an einem Boden der blütenförmigen Passfedern (230) begrenzt zu werden, und wobei die Begrenzungshülse (25) um die blütenförmige Formschlussöffnung (11) an der Kurbel (10) anliegt.

2. Anordnungsstruktur gemäß Anspruch 1, bei der jedes von zwei Enden eines Spindellochs (220) des Körpers (22) des Pedals (20a) mit einem Lager (221, 222) ausgestattet ist.

3. Anordnungsstruktur gemäß Anspruch 2, bei der jedes der Lager (221, 222) ferner mit einer Unterlegscheibe (225) ausgestattet ist.

4. Anordnungsstruktur gemäß Anspruch 1, bei der das Befestigungsmittel (30) aus einem Bolzen (31) und einer Unterlegscheibe (32) besteht und ein Kopf des Bolzens (31) ein hexagonales Loch (310) aufweist.

## Revendications

1. Structure d'assemblage pour une bicyclette comprenant:
une manivelle (10) présentant un trou claveté en forme de fleur (11) à une extrémité extérieure de celle-ci ;
une pédale (20a), présentant un corps (22) et une broche (23) avec une extrémité de raccordement, l'extrémité de raccordement étant formée avec des clavettes en forme de fleur (230) correspondant au trou claveté en forme de fleur (11) de sorte que l'extrémité de raccordement soit insérée dans le trou claveté en forme de fleur (11) avec mise en prise entre le trou claveté en forme de fleur (11) et les clavettes en forme de fleur (230), et une surface d'extrémité de l'extrémité de raccordement étant formée avec un trou fileté (231); et
un élément de fixation (30) passant au travers du trou claveté en forme de fleur (11) et étant vissé dans le trou fileté (231) pour la fixation de l'extrémité de raccordement de la broche (23) à la manivelle (10);
**caractérisée en ce que**
le trou claveté en forme de fleur (11) et les clavettes en forme de fleur (230) sont des dents en forme de roue qui sont agencées dans des saillies et évidements ; et
une bride (232) est formée sur une extrémité extérieure de la broche (23) opposée à l'extrémité de raccordement de celle-ci, dans laquelle un trou hexagonal (233) est formé dans la bride (232);
la structure d'assemblage comprenant en outre un manchon d'ajustement (24) et un manchon de limitation (25) qui sont placés autour de la broche (23) pour être pris en sandwich entre la manivelle (10) et le corps (22) de la pédale (20a), le manchon de limitation (25) présente un trou intérieur (250) correspondant aux clavettes en forme de fleur (230) de sorte à être limité au niveau d'un fond des clavettes en forme de fleur (230), le manchon de limitation (25) bute contre le manivelle (10) autour du trou claveté en forme de fleur (11).

2. Structure d'assemblage selon la revendication 1, dans laquelle chacune des deux extrémités d'un trou de broche (220) du corps (22) de la pédale (20a) est dotée d'un palier (221, 222).

3. Structure d'assemblage selon la revendication 2, dans laquelle chacun des paliers (221, 222) est en outre doté d'une rondelle (225).

4. Structure d'assemblage selon la revendication 1, dans laquelle l'élément de fixation (30) est constitué d'un boulon (31) et d'une rondelle (32), et une tête du boulon (31) présente un trou hexagonal (310).
